# EUROPEAN PATENT APPLICATION

(11) **EP 3 460 663 A1**
(43) Date of publication of application: **27.03.2019**
(21) Application number: 17306236.5
(22) Date of filing: 21.09.2017
(51) Int. Cl.: G06F 11/00, G06F 11/34, G06F 11/07, G05B 23/02

(54) **APPARATUS AND METHOD FOR RARE FAILURE PREDICTION**

(71) Applicant: Thomson Licensing, 92130 Issy-les-Moulineaux (FR)
(72) Inventor: FILOCHE, Thierry, 35576 Cesson-Sévigné (FR); FONTAINE, Patrick, 35576 Cesson-Sévigné (FR); LE GUYADEC, Pascal, 35576 Cesson-Sévigné (FR)
(74) Representative: Huchet, Anne

(57) **Abstract**

A device and a method for prediction of rare failures are disclosed. A user device collects local data and events that could indicate a future failure of at least part of the device. A local failure prediction model is used to provide an estimation of a potential failure in a temporal window. Based on this estimation and on a collection ratio representing the proportion of non-failure data to be collected, the user device decides if it should send out the collected data to a collecting device. When the temporal window elapsed, the device sends out a label representing the real failure status. The collecting device uses the collected data and labels to improve the failure prediction model. The improved model may be redistributed to the plurality of user devices.

## Description

### TECHNICAL FIELD

The present disclosure relates to the domain of failure prediction and more particularly to the prediction of rare events on devices having limited memory storage capabilities.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Conventionally, anticipating software or hardware failures relies on data measured and collected locally on the equipment that may fail. By monitoring data collected at periodic time intervals, a failure prediction model predicts that an application, a service, or the equipment itself is about to fail in a near future (for example: hard drive failure prediction, network failure prediction, etc). Failure prediction models are usually designed using machine learning techniques such as Random Forest, Support Vector Machines (SVM), Neural Networks, etc. Failure prediction models are built on the past observations of failures and try to identify the environmental space of metrics where the system used to fail in the past. The prediction computed by the model provides an estimation of the probability of a failure within a prediction window: if the score is high the model predicts that the system will fail during this prediction window, else the model predicts that the system will not fail during this prediction window.

Building or improving a prediction model requires much relevant data. When using machine learning techniques, the accuracy of a model is highly impacted by the quality and the quantity of data used. In such prediction systems, a first model is built using a training dataset, based on either a first set of measurements or on data resulting from simulations. This model is then deployed in a large number of devices and additional data are collected from this "production environment": the devices provide their measurements as well as a label corresponding to the status of the failure (the predicted failure happened or not). The prediction model is then improved by including in the training dataset, the data newly collected from the production environment and performing a new training with the extended dataset. The failure prediction model can then be updated with the improved model. When performed on a large scale, such model improvements are efficient since many different situations are likely to have occurred in the plurality of different environments and to be reported by the devices. However, the improvement comes at the cost of many data exchanges, consuming network bandwidth and storage. Failure prediction is particularly costly in the case of prediction of rare events. For example, in a conventional ADSL gateway, a DSL link failure is likely to happen less than once a month on average. In that context, sending and storing all the measurements is a waste of resources, as most data correspond to the case where no failure happened.

It can therefore be appreciated that there is a need for a solution for the prediction of rare events on devices with limited memory storage capabilities that addresses at least some of the problems of the prior art. The present disclosure provides such a solution.

### SUMMARY

The present disclosure describes apparatuses and a method for predicting failures and more particularly adapted to the prediction of rare failures. A user device collects local data and events that could indicate a future failure of at least part of the device. A local failure prediction model is used to provide an estimation of a potential failure in a temporal window. Based on this estimation and on a collection ratio representing the proportion of non-failure data to be collected, the user device decides if it should send out the collected data to a collecting device. When the temporal window elapsed, the device sends out a label representing the real failure status. The collecting device uses the collected data and labels to improve the failure prediction model. The improved model may be redistributed to the plurality of user devices.

In a first aspect, the disclosure is directed to a method for predicting failures, comprising at a first device, collecting measurements during a measurement window, computing features on the collected measurements, predicting a failure score for a temporal prediction window based on a local failure prediction model using the computed features, deciding whether or not to provide the measurements collected during the measurement window to a second device that collects measurements from a plurality of first devices, and when it is decided to provide the measurements, providing the collected measurements to the second device, and at the end of the prediction window, providing a label indicating if a failure happened or not during the prediction window. A variant embodiment of first aspect further comprises discarding the collected measurements at the end of the prediction window. Another variant embodiment further comprises, at the end of a prediction window, providing a label indicating that a failure happened when a failure happened during the prediction window. In variant embodiments of the first aspect:
- the device decides to provide the measurements when the predicted failure score is over a first threshold,
- the device decides to provide the measurements when the predicted failure score is over a first threshold and a collection ratio is under a second threshold, the collection ratio being computed as a ratio between the number of decisions to provide measurements and the number of decisions not to provide the measurements,
- the device computes accuracy of the local failure prediction model and when the measured accuracy is lower than a third threshold, decrease the first threshold, when the measured accuracy is not lower a third threshold, increase the first threshold,
- the local accuracy of the local failure prediction model and the global accuracy of a global failure prediction model are computed and compared together: when the local accuracy is lower than the global accuracy, the second threshold to provide more measurements is increased, and when the local accuracy is higher than the global accuracy, the second threshold to provide less measurements is decreased,
- at least one of the first, second and third threshold are obtained from the second device,
- at the second device, the measurements received are clustered and different first, second and third threshold are provided to devices that provided measurements classified in different clusters.

In a second aspect, the disclosure is directed to a device for predicting failures, comprising memory configured to store at least measurements collected during a measurement window, a failure prediction model and computer code instructions for executing any embodiment of the method of first aspect, a processor configured to execute the computer code instructions and a network interface to communicate with at least a second device collecting measurements. In a variant embodiment, the device further comprises sensors providing physical measurements.

In a third aspect, the disclosure is directed to a computer program comprising program code instructions executable by a processor for implementing any embodiment of the method of the first aspect.

In a fourth aspect, the disclosure is directed to a computer program product which is stored on a non-transitory computer readable medium and comprises program code instructions executable by a processor for implementing any embodiment of the method of the first aspect.

### BRIEF DESCRIPTION OF DRAWINGS

Preferred features of the present disclosure will now be described, by way of non-limiting example, with reference to the accompanying drawings, in which
Figure 1 illustrates an exemplary device in which at least an embodiment of the disclosure may be implemented;
Figure 2 illustrates an exemplary system using devices according to an embodiment of the disclosure;
Figure 3 illustrates a temporal representation of events happening during an exemplary prediction according to an embodiment of the disclosure;
Figure 4 illustrates an exemplary flowchart of a method at a device according to an embodiment of the disclosure;
Figure 5 illustrates an exemplary flowchart of a method at a collector according to an embodiment of the disclosure;

### DESCRIPTION OF EMBODIMENTS

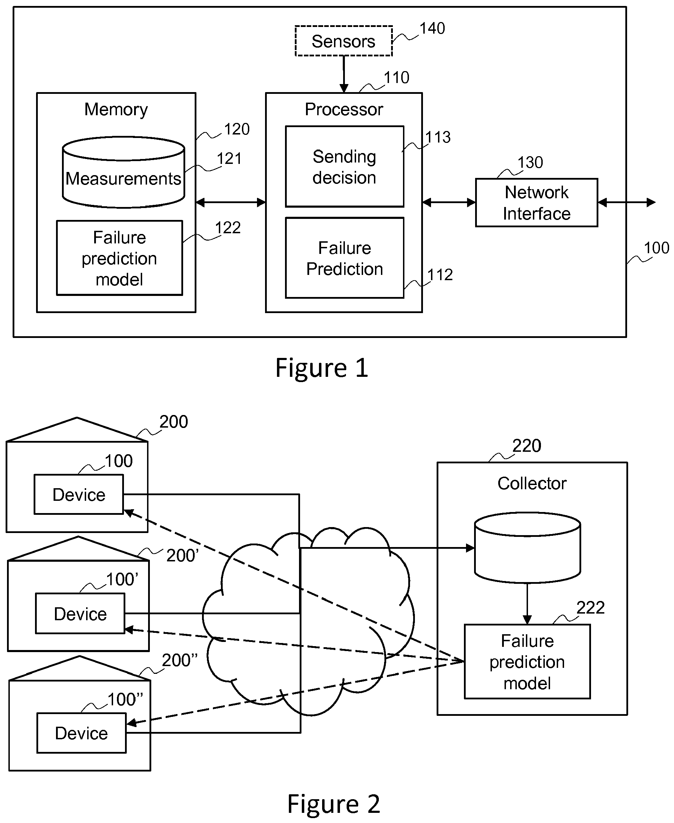

**Figure 1** illustrates an exemplary apparatus of a receiver device 100 in which at least an embodiment of the disclosure may be implemented. The skilled person in the art will appreciate that the illustrated device is simplified for reasons of clarity. According to a specific and non-limiting embodiment of the principles, the receiver device 100 comprises at least one hardware processor 110 configured to execute a method of at least one embodiment of the present disclosure comprising at least means for failure prediction 112 and sending decision 113, memory 120 configured to store at least a set of measurements 121 and a failure prediction model 122 and a network interface 130 configured to interact with other devices. Conventional network interfaces using Asymmetric Digital Subscriber Line (ADSL), fourth generation of mobile telecommunications (4G), Data Over Cable Service Interface Specification (DOCSIS) or Wi-Fi technologies constitute examples of the network interface 130. Other network interfaces may be used. The device 100 may optionally comprise sensors 140. Heat sensors, humidity sensors, movement detection sensors or global positioning sensors are examples of sensors 140. A non-transitory computer readable storage medium, not illustrated in figure 1, stores computer readable program code that is executable by the processor 110 to perform at least one of the methods described herein.

The type of measurements done for the prediction depend on the type of errors that occur in the system or device under surveillance and are generally a combination of a plurality of metrics.

In a preferred embodiment, the network interface 130 is an ADSL interface and the device 100 is a gateway. In such environment, it would be possible for example to predict DSL link failures based on measurements about low-level network features like packet error loss, SNR level, FEC error counter, CRC error, HEC errors, link-retrain errors, loss of framing errors, etc.

In an alternate embodiment, the network interface 130 is a 4G interface and the device 100 is a smartphone embedding heat and humidity sensors 140. In such environment, it would be possible for example to predict battery failures related to specific climatic conditions. In another embodiment, the network interface 130 is a Wi-Fi interface and the device 100 is a tablet embedding movement sensors 140. In such environment, it would be possible for example to predict screen failures related to repeated falls. In another embodiment, the network interface 130 is a SATA interface and the device 100 is a hard disk drive. In such environment, it would be possible for example to predict disk failures based on measurements about low-level read/write errors.

**Figure 2** illustrates an exemplary system using receiver devices according to an embodiment of the disclosure. A plurality of devices 100 100' 100" are located into a plurality of households 200 200' 200" and cooperate with the collector 220 to provide the prediction of rare failures. An initial failure prediction model 222 is provided to the devices 100 100' 100" or built-in. Each device 100 100' 100" performs local measurements and locally predicts a failure according these measurements and the local failure prediction model. When a prediction is performed, each device decides whether or not to provide the measurement and the label to the collector 220. When the data are provided, the collector 220 aggregates the measurement and the label with the other measurements and labels collected from other devices and with the training data and performs a new training of the failure prediction model. If the new model improves the accuracy of the prediction, it is provided to the plurality of devices so that they benefit from the improvements.

According to different embodiments detailed hereunder, the device decision to provide the data is either taken completely locally or according to additional data provided by the collector. Thus, the devices prevent the waste of network and storage resources by avoiding providing unnecessary data that would not help to improve the model.

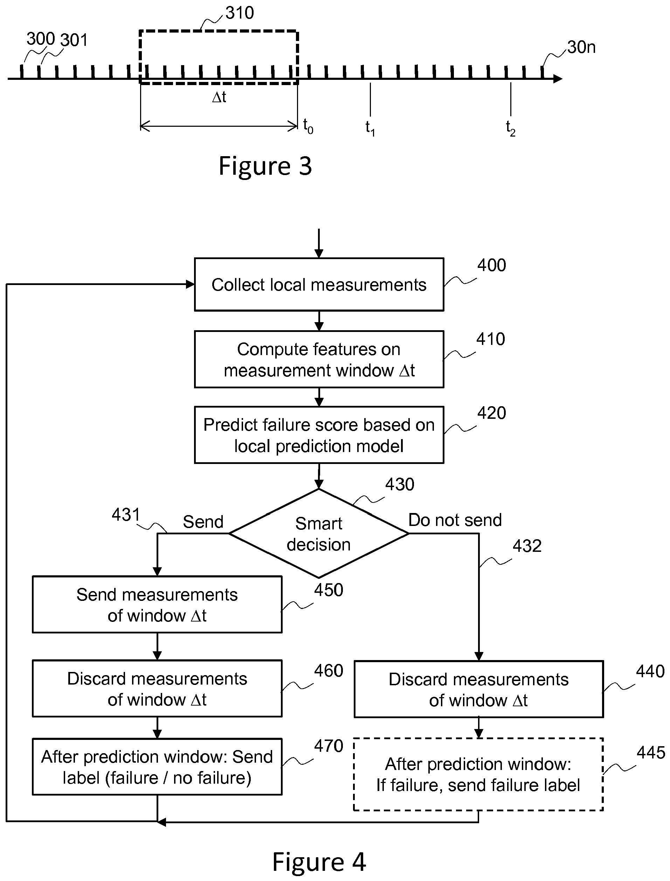

**Figure 3** illustrates a temporal representation of events happening during an exemplary prediction according to an embodiment of the disclosure. Events 300, 301, 30n represent the periodic measurements. Each vertical line on the diagram correspond to one measure performed by the device 100. The failure prediction model uses an aggregated measurement window 310 of duration Δt and is able to provide, at t0, an estimation of the probability of a failure within a prediction window that ranges from t1 to t2. Between t1 and t2, the device will monitor if the failure happens so that, at t2, it will be able to associate a label (failure or no_failure) to the measurements performed during Δt. Depending on the prediction and on the reality of the failure, four cases can be distinguished:
- True Positive: the model predicted a failure during the prediction window and at least one failure was detected in that period,
- False Negative: the model did not predict a failure during the prediction window, but at least one failure was detected in that period,
- True Negative: the model did not predict any failure during the prediction window and no failure was detected in that period,
- False Positive: the model predicted a failure during the prediction window, but no failure was detected in that period.

For the prediction of rare events, most of the events fall into the true negative case, corresponding to the state where nothing happened and the data corresponding to this case will probably not help to improve the prediction model since similar data have already been recorded a huge number of times. In the preferred embodiment, the gateway deals with failure of DSL link that is likely to happen less than once a month on average. In a conventional implementation, the gateway would for example perform the measurements each minute. This means collecting 60x24x31=44640 no_failure events for a single failure. If the gateway was to accumulate the measurements to send them out once a day, for example measuring 40 parameters each minute with a sample size of 4 bytes per parameter, approximately 230 Kbytes would be required each day, representing a significant portion of memory for such a gateway. Indeed, manufacturers of gateways try to optimize the size of installed memory since the size of memory greatly impacts the cost of the gateway that often is considered as a low-cost device.

**Figure 4** illustrates an exemplary flowchart of a method in a device according to an embodiment of the disclosure. In step 400, the device 100 collects local measurements. In the preferred embodiment that considers gateway devices, the gateway collects measurements based on metrics available for the different network layers such as packet error loss, SNR level, FEC error counter, CRC error, HEC errors, link-retrain errors, loss of framing errors, etc. Such information being accessible directly at the software level, the gateway does not require to use external sensors. In other embodiments, generic or dedicated sensors are used to perform the measurements. Those sensors may be external to the device 100. In step 410, features are computed on the measurements collected. In step 420, a failure score is predicted based on the local prediction model. This score is for example a percentage. The device compares the predicted score to a threshold to decide if there is a failure or not. The level of the threshold can be adjusted to be more or less selective. In step 430, a smart decision is taken, based on local parameters and history. In one embodiment, this decision is also based on parameters and history data obtained from the collector 220. In branch 431, when the decision is "*Send*"*,* the measurements are provided to the collector 220 in step 450. In step 460, the measurements are then discarded, freeing up the memory needed for their storage. In step 470, the device 100 monitors for failures and when the prediction window elapses (at t2 in figure 3) the device reports a label corresponding to the reality of the failure: "failure" if at least one failure happened during the prediction window and "no_failure" if no failure happened during the prediction window. The device is then ready to iterate at step 400. In branch 432, when the decision is *"Do not send',* the measurements are then optionally discarded in step 440. Optionally, in step 445, the device 100 monitors for failures and in the case a failure happened during the prediction window, the device reports a "failure" label at the end of the prediction window (at t2 in figure 3). This information is used by the collector to determine the precision of the prediction model. It can also be used by the device itself to compute a local estimation of the precision of the local prediction model.

Discarding measurement can be done using the conventional technique of sliding window where the measurement widow slides progressively and unused data is discarded progressively, one measurement after the other according to the window sliding.

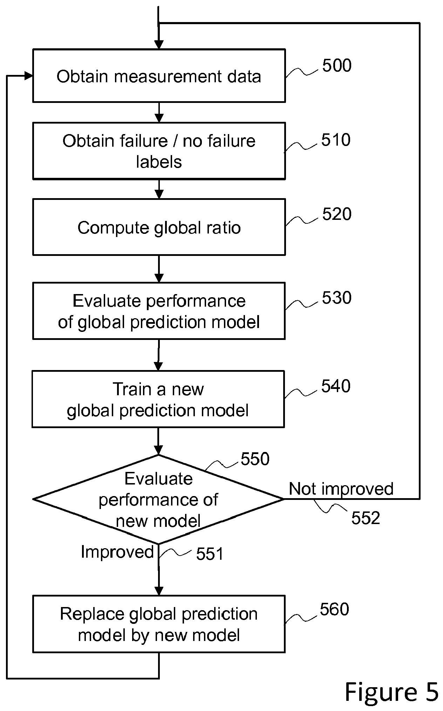

**Figure 5** illustrates an exemplary flowchart of a method in a collector device according to an embodiment of the disclosure. In step 500, the collector 220 obtains measurement data for a device 100 100' 100" (figure 2). In step 510, the collector 220 obtains a label corresponding to a measurement. The label indicates the reality of the failure and provides ground truth for the model. Both the measurement data and the labels integrate means to make the correspondence between a measurement data and the corresponding label. In one embodiment, the measurement data and the labels are timestamped and comprise an identifier of the device such as serial number or IP address. In another embodiment, the measurement data comprises a unique identifier that is for example randomly generated and the label comprises the same identifier.

In step 520, a global ratio is computed, corresponding to the ratio between the number of "failure" label and the number of "no_failure" labels. The information in the no failure events are usually redundant. A typical 1:1 ratio in the training and test set provides good results. In machine learning technics, on an unbalanced dataset (eg ratio of 1:1000), even if it is not the best technique, it is known that sub-sampling (with a ratio of 1:1) over the majority class provides good results. This ratio will be used to guide the smart decisions taken by the devices.

In step 530, the performance of the global prediction model is evaluated according to the labels newly obtained as well as the previous training data. The performance is evaluated using conventional precision, recall and F-measure computations based on the number of true positives, false positives, true negatives and false negatives. In step 540, a new prediction model is trained based on the global prediction model and the previous dataset augmented with the newly obtained measurements and labels. The performance of this new model is evaluated and, in step 550, is compared to the performance of the global prediction model. If the new model has improved performances, in branch 551, then the global prediction model is replaced by this new model in step 560. If there is no improvement, in branch 552, the collector iterates the complete process.

The previous description provides the overall vision of the operation of the prediction system. The prediction needs to fulfill two goals: the first one is to provide a good prediction, with appropriate performances regarding the precision/recall parameters, and the second one is to optimize the network and storage resources. Unfortunately, these are opposite goals. Therefore, a tradeoff between a systematic and high rate collection of data and a lower rate sampling of collection of data need to be performed to optimize the cost of operation and performance of model. This tradeoff is the key element in the prediction and is materialized by the smart decision 430. A desirable situation would be to obtain a balanced training set: i.e. to have a 50% ratio of collected metrics for failure events and no failure events.

In one embodiment, the device provides all the measurements related to a failure event and provide a sub-sampling of the metrics related to a "no_failure" event. For that the smart decision is taken as follows:
- If the local prediction model predicts a failure score above a threshold, then the collected measurements are provided to the collector,
- If the local prediction model predicts a failure score that is not above the threshold, then only a small ratio of the collected measurements is provided to the collector, for example one out of hundred. In an example where the device makes a prediction each hour, and if all those predictions are "no_failure", then the device will provide only one set of measurements every 100 hours, and the other 99 measurements are discarded,
- Each time a set of measurements is provided, the corresponding label is provided at the end of the prediction window.

In a variant embodiment, when no measurements were sent but a failure happened within the prediction window (corresponding to the false negative case) the "failure" label is provided to improve the estimation of the accuracy of the prediction model.

In a variant embodiment, the performance of the prediction model is either evaluated by the device 100 or obtained from the collector 220. When the accuracy is low, the threshold that triggers the failure decision is decreased. As the accuracy of the prediction model increases after some updates, this threshold is increased. In other words, the threshold to trigger the failure decision is based on the estimated accuracy of the first model (for example accuracy 60%, threshold = 60% ; accuracy 90%, threshold 80%).

In a variant embodiment, when no failure is predicted and the measurements are discarded by the device to respect the collection ratio but a failure is later observed within the prediction window, the device lowers its threshold in order to decrease the probability of false negative case for this specific device.

In a variant embodiment, the device measures the performance of its local prediction model in this specific context, obtains the performance of the global prediction and changes the collection ratio upon comparison of both performances. Indeed, each device is surrounded by a different context: hardware model, software version, number of devices connected, data usage of these devices, frequency of connection/disconnections, ADSL line characteristics, and so on. As a consequence, each device has its own ground truth and encounters a specific local accuracy of the model. Comparing its local accuracy with the global one gives information to the device about the confidence it can have regarding the prediction model and the interest of its data. If the local accuracy is similar or better than the global accuracy, it means that its environment is globally well known by the global prediction model and the device can reduce the collection ratio. If the local accuracy is lower than the global accuracy, it means that its environment is not well handled by the global prediction model and that its local data are of high interest to improve the model. This device will increase its collection ratio.

In a variant embodiment, the smart decision is under control of the collector. The collector builds clusters of devices for example having common behaviour (for example having same usages, same number of connected devices, failures occurring on same period, etc.) or parameters (for example having same hardware model, same software version, same geographic location, etc.). Based on these clusters, the backend may request to a specific group of devices to collect data with a higher or lower ratio than the global one in order to improve the global dataset or to use a new value for the threshold that triggers the failure decision or to change the accuracy threshold that may be used to increase or decrease the collection ratio.

In a variant embodiment, an initial prediction model is built by collecting all measurements until a sufficiently accurate model is obtained.

In a variant embodiment, a small fraction of the devices continues to send all metrics without buffering in order to evaluate or improve the model.

As will be appreciated by one skilled in the art, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system".

Furthermore, aspects of the present principles can take the form of a computer readable storage medium. Any combination of one or more computer readable storage medium(s) can be utilized. It will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing.

## Claims

1. A method for predicting failures, comprising at a first device:
- collecting (400) measurements during a measurement window;
- computing (410) features on the collected measurements;
- predicting (420) a failure score for a temporal prediction window based on a local failure prediction model using the computed features;
- deciding (430) whether or not to provide (450) the measurements collected during the measurement window to a second device that collects measurements from a plurality of first devices; and
- when it is decided (431) to provide the measurements, providing (450) the collected measurements to the second device, and at the end of the prediction window, providing (470) a label indicating if a failure happened or not during the prediction window.

2. The method of claim 1 further comprising discarding the collected measurements at the end of the prediction window.

3. The method according to any one of claims 1 or 2 further comprising, at the end of a prediction window, providing (470) a label indicating that a failure happened when a failure happened during the prediction window.

4. The method according to any one of claims 1 to 3 wherein the device decides to provide the measurements when the predicted failure score is over a first threshold.

5. The method according to to any one of claims 1 to 3 wherein the device decides to provide the measurements when the predicted failure score is over a first threshold and a collection ratio is under a second threshold, the collection ratio being computed as a ratio between the number of decisions to provide measurements and the number of decisions not to provide the measurements.

6. The method according to claim 5 further comprising computing the accuracy of the local failure prediction model and:
- when the measured accuracy is lower than a third threshold, decrease the first threshold,
- when the measured accuracy is not lower a third threshold, increase the first threshold.

7. The method according to claim 5 further comprising computing the local accuracy of the local failure prediction model and computing the global accuracy of a global failure prediction model, and comparing the local accuracy to the global accuracy:
- when the local accuracy is lower than the global accuracy, increase the second threshold to provide more measurements;
- when the local accuracy is higher than the global accuracy, decrease the second threshold to provide less measurements.

8. The method according to claim 5 further comprising obtaining at least one of the first, second and third threshold from the second device.

9. The method according to claim 8 further comprising, at the second device, clustering the measurements received and providing different first, second and third threshold to devices that provided measurements classified in different clusters.

10. A device (100) for predicting failures, comprising:
- memory (120) configured to store at least measurements (121) collected during a measurement window, a failure prediction model (122) and computer code instructions for executing the method according to any one of claims 1 to 9;
- a processor (110) configured to execute the computer code instructions; and
- a network interface (130) to communicate with at least a second device (220) collecting measurements.

11. The device according to claim 9 further comprising sensors to provide physical measurements.

12. Computer program comprising program code instructions executable by a processor (110) for implementing the steps of a method according to at least one of claims 1 to 7.

13. Computer program product which is stored on a non-transitory computer readable medium and comprises program code instructions executable by a processor (110) for implementing the steps of a method according to at least one of claims 1 to 7.
